# EUROPÄISCHE PATENTSCHRIFT

(11) **EP 3 681 655 B1**
(45) Veröffentlichungstag und Bekanntmachung des Hinweises auf die Patenterteilung: **24.11.2021**
(21) Anmeldenummer: 18778831.0
(22) Anmeldetag: 14.09.2018
(51) Int. Cl.: B21J 15/02, B21J 15/10, B23P 19/06

(54) **VORRICHTUNG SOWIE EIN VERFAHREN ZUM SETZEN EINES VERBINDUNGSELEMENTS AN EINEM WERKSTÜCK**
DEVICE AND METHOD FOR SETTING A CONNECTION ELEMENT ON A WORKPIECE
DISPOSITIF AINSI QUE PROCÉDÉ POUR POSER UN ÉLÉMENT DE LIAISON SUR UNE PIÈCE

(30) Priorität: 14.09.2017 DE 102017216348
(43) Veröffentlichungstag der Anmeldung: 22.07.2020
(73) Patentinhaber: Richard Bergner Verbindungstechnik GmbH & Co.KG, 91126 Schwabach (DE)
(72) Erfinder: SKOLAUDE, Andreas, 91126 Schwabach (DE)
(74) Vertreter: FDST Patentanwälte
(86) Internationale Anmeldenummer: PCT/EP2018/074839
(87) Internationale Veröffentlichungsnummer: WO 2019/053177

(56) Entgegenhaltungen:
- DE-C- 750 791
- DE-C1- 3 704 763
- US-A- 4 893 976
- US-A- 5 722 139

## Beschreibung

Die Erfindung betrifft eine Vorrichtung sowie ein Verfahren zur Durchführung eines Setzvorgangs zum Setzen von Verbindungselementen an einem Werkstück.

Bei den Verbindungselementen handelt es sich beispielsweise um Einpresselemente wie Einpressmuttern, Einpressbolzen (EPB), Einpressschrauben oder auch Niete, welche durch Ausüben einer vorbestimmten Einpresskraft in ein Werkstück (Bauteil), üblicherweise ein Blech, eingepresst werden. Die vorliegende Anmeldung betrifft dabei insbesondere das Einpressen von Einpressbolzen, wie z.B. Einpressschrauben. Bei den Verbindungselementen kann es sich daneben auch um sonstige Schrauben oder auch Niete oder Bolzen handeln. Die Verbindungselemente werden bei automatisierten Verfahren oder auch bei teilautomatisierten Verfahren mit Hilfe einer sogenannten Setzeinheit am Werkstück befestigt. Diese ist üblicherweise als eine Einpresseinheit ausgebildet, welche einen hydraulisch/pneumatisch/elektrisch verfahrbaren Stößel aufweist, welcher eine Einpresskraft in Setzrichtung auf das Verbindungselement ausübt. Aus der WO 2016/156359 A2 ist ein elektrischer Direktantrieb für eine Setzeinheit zu entnehmen.

Die Verbindungselemente werden üblicherweise mit Hilfe einer Zuführeinheit einem Setzkopf der Setzeinheit zugeführt. Eine als Zuführblock bezeichnete Zuführeinheit ist aus der WO 2016/055478 A1 zu entnehmen. Eine weitere Zuführeinheit ist aus der WO 2017/102668 zu entnehmen.

Sofern es sich bei den Einpresselementen nicht um selbststanzende Elemente handelt, muss in das Werkstück vor der Setzoperation ein Loch eingestanzt werden, in das das Einpresselement eingesetzt wird. Dies erfordert einen zusätzlichen Arbeitsgang. Bei dem Loch-Stanzvorgang fällt dabei ein sogenannter Stanzbutzen an, welcher entsorgt werden muss.

Aus der gattungsgemäßen DE 750 791 C ist eine automatische Nietmaschine zur Herstellung von Senknietverbindungen an Blechen zu entnehmen, wobei mehrere Werkzeuge, die u.A. für ein Lochen der Blecke, für eine Nieteinführung und für ein Stauchen eines Schließkopfes verwendet werden, innerhalb einer gemeinsamen Nietachse bewegt werden.

Aus der US 5 722 139 A ist eine Maschine zum Setzen eines Niets zu entnehmen, bei der zunächst ein kleines Vorloch gestanzt wird und anschließend der Niet eingepresst wird.

Aus der US 4 893 976 A ist ein Verfahren zum Setzen eines Niets zu entnehmen, bei dem in mehreren Arbeitsstationen zunächst eine Lochstanzoperation und nachfolgend eine Niet-Setzoperation durchgeführt wird.

Aus der DE 37 04 763 C1 ist das Setzen eines Einpressbolzens an einem Blech mit einem tiefgezogenen Kragen zu entnehmen.

In vielen Anwendungsbereichen kommt es dabei auf eine möglichst hohe Taktrate für die Befestigung der Verbindungselemente am Werkstück an. Dies betrifft insbesondere auch die Kraftfahrzeugindustrie.

Für das automatisierte Setzen werden dabei häufig Bearbeitungsmaschinen, insbesondere auch Industrieroboter eingesetzt, bei denen die Setzeinheit an einer frei im Raum verfahrbaren Roboterhand angeordnet ist. Insbesondere bei Kraftfahrzeugen werden die Verbindungselemente häufig an komplexen Karosseriebauteilen angeordnet, wobei die Befestigungsstellen aufgrund einer komplexen Bauteilgeometrie für die Setzeinheit teilweise schwer zugänglich sind.

Bei dem Setzen von Einpressbolzen wird das Bauteil für das Einpressen des Einpressbolzens häufig speziell vorbereitet, um eine zuverlässige Fixierung des Einpressbolzens zu gewährleisten. Hierzu werden häufig eine sogenannte Tüllung sowie ein Stanzloch in einem ersten Arbeitsgang in das Blech eingebracht. Bei der Tüllung handelt es sich um einen um das Loch umlaufenden, tiefgezogenen Kragen. Der Kragen ist durch ein Umformen nach Art eines Tiefziehens des Lochrands ausgebildet, d.h. der Kragen ist nach oben in Richtung zu einem Kopf des Einpressbolzens tiefgezogen. Das so vorbereitete Bauteil wird bei herkömmlichen Anlagen z.B. mittels Robotergreifer in einen C-Bügel zum Einpressen des Bolzens eingelegt. Das vorhandene Stanzloch dient als Zentrierung auf einem matrizenseitig angeordneten Zentrierdorn eines Werkzeugträgers, d.h. das Loch im Werkstück wird quasi mit Hilfe des Robotergreifers auf den Zentrierdorn aufgefädelt.

Bei den herkömmlichen Anlagen bestehen folgende Nachteile:
- Es ist ein zusätzlicher Arbeitsschritt für Einbringung des tiefgezogenen Kragens sowie des Stanzlochs notwendig.
- Durch Abweichung der Ist-Position von Zentrierstift und Loch- bzw. Werkzeugposition (bestimmt durch Roboter) beim "Auffädeln" kommt es zu Verspannungen zwischen den Komponenten. Diese Positionsabweichung hängt von der exakten Programmierung einer Roboterbahn des Roboters ab. Ist die Abweichung zu groß lässt sich das Bauteil nicht oder nur schwer auf den Zentrierdorn "auffädeln". was zu Störungen führen kann.

Ausgehend hiervon liegt der Erfindung die Aufgabe zu Grunde, ein einfaches und zuverlässiges Setzen von Verbindungselementen, insbesondere von Einpressbolzen zu ermöglichen.

Die Aufgabe wird erfindungsgemäß gelöst durch eine Vorrichtung mit den Merkmalen des Anspruchs 1 sowie durch ein Verfahren mit den Merkmalen des Anspruchs 15. Bevorzugte Weiterbildungen sind in den abhängigen Ansprüchen enthalten. Die im Hinblick auf die Vorrichtung angeführten Vorteile und bevorzugten Ausgestaltungen sind sinngemäß auch auf das Verfahren zu übertragen und umgekehrt.

Die Vorrichtung umfasst allgemein einen Werkzeugträger, der insbesondere als C-Bogen ausgeführt ist, und welcher an seinem oberen C-Arm eine Setzeinheit aufweist. Die Setzeinheit ist mit Hilfe einer Zustelleinheit in einer Zustellrichtung verfahrbar. Die Zustelleinheit ist zusammen mit einem vorzugsweise elektrischen Antrieb ebenfalls am Werkzeugträger angeordnet. Mit Hilfe des Antriebs wird ein Stößel in einer Zustellrichtung zugestellt. Der Stößel ist dabei typischerweise innerhalb eines Stößelrohrs geführt und wirkt auf eine Stempelhülse sowie einen Stempel der Setzeinheit ein. Die Setzeinheit ist an der Zustelleinheit und zwar vorzugsweise am Stößelrohr befestigt. Die Setzeinheit bildet daher mit der Zustelleinheit eine Funktionseinheit.

Gegenüberliegend zur Setzeinheit ist matrizenseitig ein Bauteilträger angeordnet, auf dem das Werkstück / Bauteil, speziell Blech aufgelegt wird. Die Vorrichtung ist für einen zweistufigen Setzvorgang ausgebildet, wobei in einer ersten Stufe eine Lochstanzoperation ergänzt um eine Lochformoperation ausgeführt wird und in einer zweiten Stufe dann der eigentliche Setzvorgang. Unter Lochformvorgang wird die Ausbildung des tiefgezogenen Kragens verstanden, also das Umformen bzw. hochbiegen des Lochrand des Stanzlochs. Ein besonderer Vorteil hierbei ist, dass die beiden Stufen jeweils innerhalb der gleichen Achse durchgeführt werden, d.h. das Werkstück und die Vorrichtung, speziell die Setzeinheit verbleiben in der gleichen lateralen Relativposition. Für die beiden Stufen / Operationen werden die gleiche Setzeinheit und der gleiche Bauteilträger verwendet. Ein Werkzeugwechsel ist nicht vorgesehen oder erforderlich. Sowohl die Lochstanz-/Lochformoperation sowie auch die eigentliche Setzoperation erfolgen mit Hilfe der gleichen Setzeinheit und innerhalb der gleichen Achse.

Die einzelnen Schritte beim Setzvorgang werden mit Hilfe einer Steuervorrichtung veranlasst, die die einzelnen, nachfolgend noch beschriebenen Antriebe in geeigneter Weise und aufeinander abgestimmt ansteuert.

Zur Ausbildung des tiefgezogenen Kragens im Werkstück weist der Bauteilträger eine entgegen der Zustellrichtung verschieblich angeordnete Prägehülse auf, welche im Betrieb von unten gegen das Werkstück verfahrbar ist, sodass also der gewünschte Kragen (Tüllung) ausgebildet wird.

Zur Durchführung der Lochstanzoperation umfasst die Setzeinheit einen in Zustellrichtung verfahrbaren (Stanz-) Stempel.

Vorzugsweise weist die Prägehülse einen freien Innenkanal auf, in den der Stanzstempel bei der Lochstanzoperation eindringt.

Die Prägehülse weist daher quasi einen inneren Rand auf, welcher als Stanzrand wirkt, wenn der Stanzstempel von oben in die Prägehülse hinein fährt. Der Durchmesser des Stanzstempels ist dabei an den Durchmesser (freier Innendurchmesser) der Prägehülse angepasst. Die Prägehülse insbesondre zusammen mit einem insbesondere hülsenförmigen Grundkörper, in dem die Prägehülse angeordnet ist, bildet daher eine Art Stanzmatrize aus.

Die Lochstanzoperation sowie die Lochformoperation erfolgen vorzugsweise gleichzeitig und damit gemeinsam. Dies äußert sich darin, dass zu einem bestimmten Zeitpunkt eine vordere (obere) Stirnfläche der Prägehülse axial (entgegen der Zustellrichtung) oberhalb einer Unterseite des Werkstücks positioniert ist. Gleichzeitig ist eine vordere (untere) Stirnfläche des Stempels unterhalb (in Zustellrichtung betrachtet) des tiefgezogenen Kragens / Lochrands und innerhalb der Prägehülse angeordnet ist.

Unter gleichzeitig wird vorliegend insbesondere verstanden, dass die Prägehülse ein Widerlager für den Stanzvorgang bildet, also als eine Stanzmatrize ausgebildet ist, in die der Stempel zumindest ein Stück weit einfährt.

Vorzugsweise sind die Zustellbewegungen des Stempels und der Prägehülse derart aufeinander abgestimmt, dass der Kragen zumindest teilweise mittels der Prägehülse tiefgezogen wird und erst nachfolgend die Stanzoperation mit dem Stempel beginnt. Insbesondere ist der Tiefziehvorgang noch nicht abgeschlossen, wenn der Stanzvorgang beginnt. Alternativ fährt die Prägehülse zunächst in eine vordere Endposition, bevor der Stanzvorgang beginnt, bevor also der Stempel in das Werkstück eindringt und das Loch ausstanzt. Dieser Ablauf mit dem zunächst zumindest teilweisen Tiefziehen des Kragens gewährleistet eine genaue, maßhaltige Lochausbildung. Alternativ besteht auch die Möglichkeit, zunächst den Stanzvorgang durchzuführen und anschließend den Tiefziehvorgang.

Weiterhin bildet die Stempelhülse, innerhalb derer der (Stanz-) Stempel geführt ist, gleichzeitig ein Widerlager für die Lochformoperation, also für die Prägehülse aus. Die Prägehülse formt daher den Lochrand gegen die Stempelhülse um, presst diesen also gegen die Stempelhülse. Der durch die Prägehülse tiefgezogene Kragen wird also mit seiner ringförmigen Stirnfläche gegen die Stempelhülse gepresst. Dadurch wird die Stirnfläche geglättet oder planiert. D.h. die ringförmige Stirnfläche wird als eine plane, horizontal verlaufende Fläche ausgebildet. Die Stempelhülse wird hierzu an eine vorgegebene Axialposition zugestellt.

In zweckdienlicher Weiterbildung ist innerhalb der Prägehülse ein Zentrierstift verfahrbar, der vorzugsweise nach erfolgter Lochstanzoperation in oder durch das erzeugte Loch hindurch verfahrbar ist. Insbesondere wird der Zentrierstift hierbei gesteuert verfahren, beispielsweise mit Hilfe eines entsprechenden (dritten) Antriebs, speziell eines Pneumatikantriebs. Alternativ kann jedoch auch eine passive Betätigung des Zentrierstifts beispielsweise mit Hilfe eines Federelements erfolgen.

Der Bauteilträger weist daher mehrere konzentrisch zueinander angeordnete Bauteile auf, nämlich einen Grundkörper, die darin geführte Prägehülse sowie den in dieser geführten Zentrierstift.

Die Prägehülse selbst wird zweckdienlicherweise mit Hilfe eines mechanischen Gestänges, insbesondere mit Hilfe eines Kniehebelmechanismus gesteuert verfahren. Dabei wird die Prägehülse vorzugsweise in eine vordere Position zur Durchführung der LochformOperation mit Hilfe des mechanischen Gestänges verfahren. Speziell erfolgt dies mit Hilfe eines (zweiten) Antriebs, welcher vorzugsweise ein elektromotorischer Antrieb ist. Dabei wird speziell der Kniehebelmechanismus in einen gestreckten Zustand überführt. Der Kniehebelmechanismus übt daher bei seiner Verstellung die für die Ausbildung der Tüllung erforderliche Kraft aus. Alternativ hierzu besteht grundsätzlich auch die Möglichkeit, zunächst die Prägehülse in eine vordere Position zu verfahren und die erforderliche Kraft von oben über die Setzeinheit auszuüben, wenn also das Bauteil auf die dann ausgefahrene Prägehülse aufgesetzt wird.

In bevorzugter Weiterbildung wird die Prägehülse vor dem Einpressen des Verbindungselements wieder in eine rückgezogene Position zurückverfahren. Vorzugsweise bildet Prägehülse in der rückgezogenen Position einen Gegenanschlag oder Widerlager für die Einpressoperation aus. Die Prägehülse ist in der rückgezogenen Position also an einer geeigneten Axialposition positioniert, so dass sie die beim Einpressvorgang einwirkenden Kräfte aufnehmen kann. Eine vordere Stirnfläche der Prägehülse ist hierzu vorzugsweise zumindest in etwa fluchtend mit der Bauteilauflage, also auf der axialen Höhe der Bauteilauflage angeordnet ist. Hierunter wird insbesondere auch verstanden, dass die vordere Stirnfläche geringfügig, beispielsweise um eine halbe Bauteildicke des Werkstücks von einer exakt fluchtenden Ausrichtung abweicht.

Für eine zuverlässige Aufnahme der Kräfte ist die Prägehülse in der rückgezogenen Position vorzugsweise gegen einen zweiten mechanischen Festanschlag verfahren.

Der bei der Lochstanzoperation angefallene Stanzbutzen wird über eine innerhalb des Grundkörpers ausgebildete Abführeinrichtung entsorgt. Hierzu ist speziell eine seitlich angeordnete, schwenkbare Klappe ausgebildet, welche im Bedarfsfall eine Rampe zur Entsorgung des Stanzbutzens zur Seite hin bildet. Die schwenkbare Klappe wird vorzugsweise automatisch betätigt, insbesondere mittels des Zentrierstifts verdrängt, wenn dieser nach vorne verfahren wird.

Da bei der Lochformperation Kräfte entgegen der Zustellrichtung ausgeübt werden, müssen diese zuverlässig von der Setzeinheit und dem Niederhalter aufgenommen werden. Der Niederhalter ist bevorzugt gegen ein Federelement, speziell ein Federelement innerhalb der Zustelleinheit federnd gelagert. Um ein Ausweichen bei der Lochformperation zu verhindern, ist am Niederhalter ein erster mechanischer Festanschlag ausgebildet, welcher während der Lochstanz- und Lochformoperation gegen eine mechanische Anschlagsfläche der Zustelleinheit anliegt, so dass die Kräfte aufgenommen werden.

Die Vorrichtung ist in ihrem Gesamtaufbau weiterhin dadurch gekennzeichnet, dass die Zustelleinheit einen Stößel, ein Federelement sowie ein Stößelrohr aufweist, welches den Stößel und das Federelement aufnimmt. Die Setzeinheit ist am Stößelrohr befestigt ist und der Stößel wirkt auf den Stempel ein und verschiebt diesen in und entgegen der Zustellrichtung. Weiterhin wirkt das Federelement auf den Niederhalter ein. Schließlich ist der Stempel als eine rohrförmige Hülse ausgebildet, in der ein Auswerferstift relativverschieblich zur Hülse geführt ist.

Bei der Durchführung der mehrstufigen Stanz- sowie Setzoperation erfolgen dabei insbesondere folgende Prozessschritte:
Zunächst wird Vorrichtung in einem ersten Schritt in eine Ausgangsstellung gebracht. Hierbei wird insbesondere das unvorbereitete Bauteil in den Werkzeugträger auf den Bauteilträger aufgelegt. Die Prägehülse und somit auch der Kniehebel befinden sich in einer Rückposition.

In einem nächsten Schritt erfolgt die Lochstanz- und Lochformoperation, bei der insbesondere der Niederhalter zunächst auf das Bauteil fährt und zwar speziell so lange bis der Festanschlag des Niederhalters die Anschlagfläche berührt und somit das weitere Zurückfahren des Niederhalters blockiert ist. In diesem Zustand ist dann das Werkstück zwischen Oberkante Bauteilauflage und Unterkante Niederhalter positioniert und geklemmt. Die Prägehülse wird über die Mechanik, speziell Kniehebelantrieb nach oben bewegt und verformt damit das Bauteil. Gleichzeitig erfolgt die Lochung und Abfuhr des Stanzbutzens.

Während dieser Operation ist es von Vorteil, wenn der (Stanz-)Stempel gegenüber einer Stempelhülse (mit deren Hilfe dann später das Einpresselement eingepresst wird) relativ verschiebbar ist. Es muss also eine axiale Freigängigkeit der Stempelhülse bezüglich des Stanzstempels erfolgen. Diese axiale Freigabe wird gesteuert über einen Schieber, wie später noch nachfolgend erläutert wird. Bei dieser Steuerung der axialen Freigängigkeit handelt es sich um einen selbstständig erfinderischen, unabhängigen Aspekt der vorliegenden Anmeldung.

Im dritten Schritt wird schließlich das Bauteil fixiert. Hierzu wird insbesondere zunächst das Stößelrohr zurückgezogen in eine Zwischenposition. Während dieses Rückfahrens klemmt der Niederhalter noch das Bauteil. Der Kniehebel wird zurückgefahren speziell bis zu einem Festanschlag, sodass auch die Prägehülse zurückgeführt wird. Gleichzeitig wird ein Zentrierstift ausgefahren und durch das gestanzte Loch hindurchgeführt. Dies erfolgt insbesondere pneumatisch. Durch den Zentrierstift ist damit das Bauteil fixiert und kann nicht mehr seitlich ausweichen.

Im vierten Schritt erfolgt die Zuführung des Einpresselements, insbesondere Einpressbolzen. Hierbei wird insbesondere das Stößelrohr weiter zurückgefahren in eine Ausgangsstellung und der Niederhalter wird von der Bauteiloberfläche abgehoben. Anschließend erfolgt die insbesondere seitliche Zuführung des Einpresselements in die Setzeinheit.

Schließlich erfolgt im fünften Schritt das eigentliche Einpressen. Hierbei wird das Stößelrohr wieder nach vorne in Zustellrichtung bis zu einer Einpressposition verfahren. Gleichzeitig erfolgt vorzugsweise der Rückhub des Zentrierstiftes. Beim Verfahren bis zur Einpressposition sind dabei die Stempelhülse und der Stempel axial gesperrt, d. h. sie verfahren beide gemeinsam. Sie werden also gemeinsam gegen einen Kopf des Einpressbolzens gepresst und pressen diesen in das vorgelochte Loch.

Wie zuvor bereits erwähnt, ist für die Lochstanzoperation von Vorteil, dass der Stanzstempel gegenüber der Stempelhülse weiter nach vorne verfährt, wohingegen gleichzeitig beim Einpressen beide gemeinsam verfahren. Hierzu ist allgemein vorgesehen, dass die beiden Elemente Stempel und Stempelhülse bis zu einer vorgegebenen Position zwangsgeführt werden und dass die Zwangsführung definiert, bzw. gesteuert aufgehoben wird, sodass der Stempel in eine vorgelagerte vordere Position geführt werden kann. Für die axiale Freigabe bzw. axiale Sperrung zwischen Stempel und Stempelhülse ist dabei zweckdienlicherweise eine Verdrehoperation zwischen Stempelhülse und Stempel vorgesehen. Vorzugsweise erfolgt die Verdrehung hierbei mit Hilfe eines insbesondere frei ansteuerbaren Schieberelements, welches also eines der beiden Bauteile gegen das andere verdreht. Die Verdrehung erfolgt dabei zweckdienlicherweise mit Hilfe eines Mitnehmerelements, insbesondere Mitnehmerstifts, der in die Stempelhülse oder in den Stempel eingreift und am Schieberelement angeordnet ist. Grundsätzlich ist es auch möglich, dass der Mitnehmerstift an der Stempelhülse oder dem Stempel angeordnet ist und am Schieberelement eine entsprechende Ausnahme ausgebildet ist, in die dann der Mitnehmerstift eingreift.

Das Schieberelement und die Stempelhülse verfahren in Axialrichtung bei den unterschiedlichen Schritten relativ zueinander. Dies führt dazu, dass in Axialrichtung/Zustellrichtung der Mitnehmerstift in die zugehörige Ausnehmung ein- und ausfährt. In der zugestellten Position, also speziell bei der Lochstanzoperation und der Einpressoperation, muss der Mitnehmerstift in Eingriff mit der zugehörigen Ausnehmung sein, um die Verdrehung der Stempelhülse relativ zum Stempel zu ermöglichen, um die axiale Freigabe oder die axiale Sperrung herbeizuführen. Um nunmehr sicherzustellen, dass der Mitnehmerstift zuverlässig in die zugehörige Ausnehmung hineingeführt wird, ist die Stempelhülse zumindest über einen definierten axialen Hub drehfest geführt. Hierzu ist insbesondere eine Nut-Stiftführung vorgesehen, speziell ist an der Stempelhülse ein in radialer Richtung nach außen hervortretender Stift angebracht, welcher in eine korrespondierende Nut eingreift. Diese drehfeste Führung wird ab einer definierten axialen Position aufgehoben, sodass die Verdrehung der Stempelhülse relativ zum Stempel mit Hilfe des Schieberelements gesteuert erfolgen kann.

Wesentliche Gesichtspunkte der Vorrichtung sowie des Verfahrens zum Setzen des Verbindungselements, insbesondere Einpressbolzen sind u. A.:
- Setzen von Einpressbolzen ohne Bauteilvorbereitung mit zwei Antrieben, d.h. das Werkstück ist ungelocht / ungetüllt (Kragen ist nicht ausgebildet)
- Vorzugsweise kommen elektrische Antriebseinheiten zum Steuern des Prozesses zur Anwendung, Daten aus Motorsteuerung werden vorzugsweise für eine Prozessüberwachung benutzt,
- Setzen der Verbindungselemente ohne Werkzeugwechsel und in einer Achse
- Schieber zum Steuern der Zwangsführung des zweigeteilten Einpress-/Stanzstempels, also des Stempels und der Stempelhülse
- Prägen (Tüllen, Ausformung des Kragens) wahlweise über a) Kniehebelantrieb (Antrieb mit ausreichend dimensionierter Vorschubkraft, Gegenhaltung über Antriebseinheit des Stößelrohr oder b) Kniehebel in Strecklage fahren und Prägekraft über Antriebseinheit Stößelrohr aufbringen (Niederhalter fährt auf Festanschlag)
- Festanschlag für Prägehülse, so dass die Kraft in den Werkzeugträger eingeleitet wird.

Ein Ausführungsbeispiel wird nachfolgend anhand der Figuren näher erläutert. Dabei zeigen in teilweise vereinfachten Darstellungen:
- Fig 1: eine Vorrichtung zur Durchführung eines Setzvorgangs eines Verbindungselements an einem Werkstück,
- Fig. 2A-2E: jeweils eine Querschnittsdarstellungen einer an einer Zustelleinheit befestigten Setzeinheit zu unterschiedlichen Verfahrensschritten, wobei die Figur 2A die Position in einer Ausgangsstellung zeigt, die Figur 2B eine Position bei der Loch- und Lochformoperation, die Figur 2C die Situation beim Schritt der Fixierung des Bauteils, die Figur 2D die Situation bei der Zuführung des Einpressbolzens zur Setzeinheit und die Figur 2E die Situation beim abschließenden Einpressvorgang,
- Fig. 3A-3E: vergrößerte ausschnittsweise Darstellungen der Figuren 2A bis 2E
- Fig. 4A: eine vergrößerte Darstellung des in die Figur 3B mit einem Kreis P gekennzeichneten Bereichs bei der Loch- und Lochformoperation,
- Fig. 4B: eine vergrößerte Darstellung des gleichen Bereiches, wie er mit dem Kreis Q in der Figur 3C gekennzeichnet ist beim Schritt der Fixierung des Werkstücks,
- Fig. 4C: eine vergrößerte Darstellung des gleichen Bereiches, wie er mit dem Kreis R in der Figur 3E gekennzeichnet, beim Schritt des Einpressens, sowie
- Fig. 5A, 5B: ausschnittsweise dreidimensionale Darstellungen der Setzeinheit zur Erläuterung der axialen Freigabe bzw. der axialen Sperrung der Stempelhülse relativ zu dem Stempel.

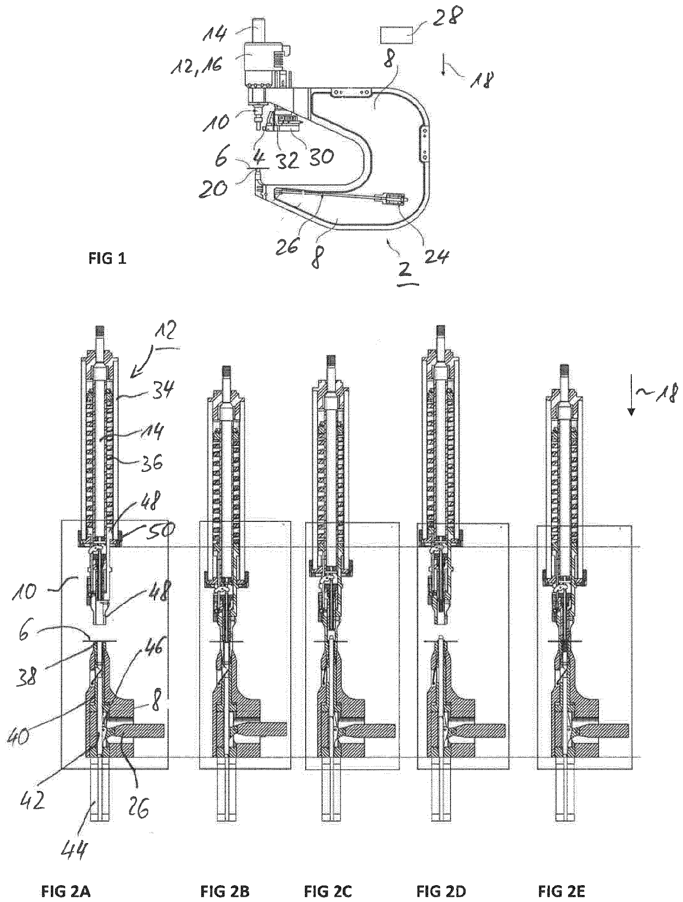

Fig. 1 zeigt eine Vorrichtung 2, die zur Durchführung eines Setzvorgangs und zum Setzen eines Verbindungselements 4, insbesondere eines Einpressbolzens in einem Bauteil oder Werkstück 6 ausgebildet ist. Bei dem Werkstück 6 handelt es sich beispielsweise um ein Blech oder Blechbauteil, beispielsweise ein Kraftfahrzeug-Bauteil. Bei dem Verbindungselement 4 handelt es sich insbesondere um einen sogenannten Einpressbolzen, welcher typischerweise form- und kraftschlüssig mit dem Werkstück 6 verbunden wird. Ein solcher Einpressbolzen ist grundsätzlich durch einen Kopf und einen sich darin anschließenden Schaft, beispielsweise ein Gewindeschaft gekennzeichnet.

Die Vorrichtung 2 weist einen Werkzeugträger 8 auf, welcher im Ausführungsbeispiel nach Art eines C-Bogens ausgebildet ist. An einem oberen Bogenarm ist eine Setzeinheit 10 angeordnet, die wiederum mit einer Zustelleinheit 12 verbunden ist. Diese weist einen Stößel 14 sowie einen Antrieb 16 auf, insbesondere einen Elektromotor, welcher den Stößel in einer Zustellrichtung 18 antreibt.

Gegenüberliegend zur Setzeinheit 10 ist ein Bauteilträger 20 am unteren Bogenarm des Werkzeugträgers 8 angeordnet. Wie nachfolgend noch näher beschrieben wird, ist innerhalb des Bauteilträgers 20 eine in und entgegen der Zustellrichtung verschiebbare Prägehülse 22 angeordnet, die mit einem Antriebsmechanismus angetrieben wird. Im Ausführungsbeispiel ist hierzu ein zweiter Antrieb 24, insbesondere ein Elektromotor vorgesehen, welcher über ein mechanisches Gestänge 26 zur Betätigung der Prägehülse 22 mit dieser verbunden ist.

Der Werkzeugträger 8 ist im Betrieb vorzugsweise an einem Manipulator, beispielsweise an einer Roboterhand eines Mehrachsroboters befestigt, und wird an die jeweiligen Positionen am Werkstück 6 herangeführt, an denen Verbindungselemente 4 gesetzt werden sollen. Zur Steuerung der Vorrichtung 2, insbesondere zur Steuerung des nachfolgend noch näher beschriebenen Setzvorgangs weist die Vorrichtung 2 weiterhin eine Steuervorrichtung 28 auf.

Die Vorrichtung 2 gemäß der Figur 1 weist weiterhin noch eine Zuführeinheit 30 auf, über die die einzelnen Verbindungselemente 4 einzelweise der Setzeinheit 10 automatisch zuführbar sind. Die Zuführung erfolgt hier seitlich, also senkrecht zur Zustellrichtung 18. Die gesamte Zuführeinheit 30 ist dabei in Zustellrichtung 18 verfahrbar, sodass die Übergabe der Verbindungselemente 4 an unterschiedlichen axialen Positionen erfolgen kann. Die einzelnen Verbindungselemente 4 werden der Zuführeinheit 30 beispielsweise über einen Schlauch 32 zugeführt.

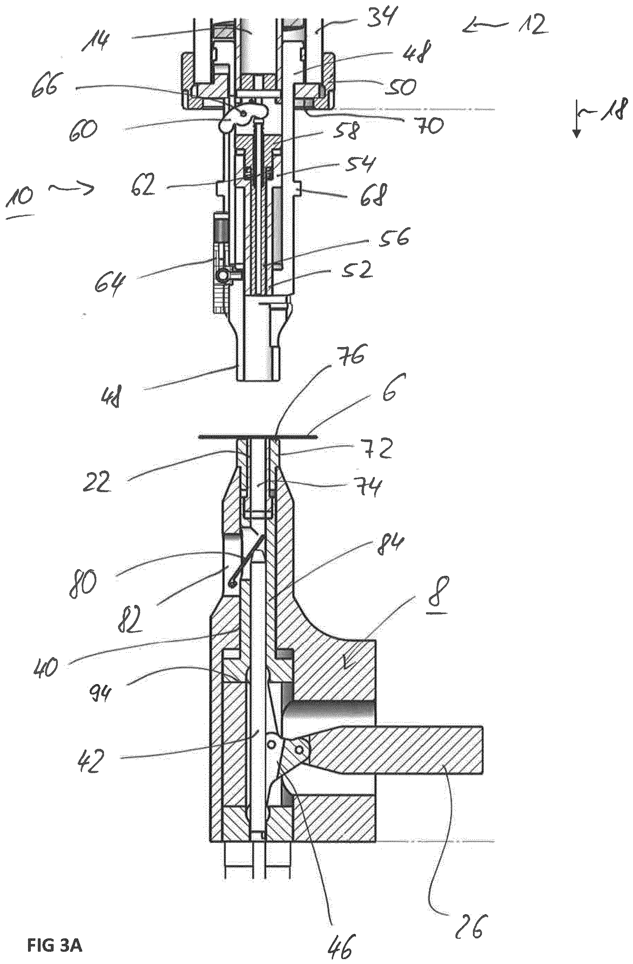

Der Aufbau der Setzeinheit 10, der Zustelleinheit 12 sowie des Werkzeugträgers 20 sowie das Verfahren zur Durchführung des Setzvorgangs werden nachfolgend im Zusammenhang mit den Figuren 2A bis 2E sowie 3A bis 3E erläutert. Die Figuren 2A bis 2E zeigen dabei unterschiedliche Verfahrensstufen bei der Durchführung eines Setzvorgangs während eines Arbeitszykluses zum Setzen eines Verbindungselements. Die Figuren 2A bis 2E geben dabei einen groben Überblick über die einzelnen Bewegungen der Setzeinheit 10 sowie der Zustelleinheit 12 bei den einzelnen Verfahrensstufen. Die Figuren 3A bis 3E zeigen jeweils vergrößerte Darstellungen im Bereich der Setzeinheit 10 sowie des Bauteilträgers 20. Die Figuren 3A bis 3E entsprechen daher den gleichen Situationen und Positionen wie in den Figuren 2A bis 2E.

Anhand der Figuren 2A bis 2E ist zunächst zu erkennen, dass die Setzeinheit 10 über eine mechanisch feste Verbindung, insbesondere Schraubverbindung an der Zustelleinheit 12 befestigt ist. Die Zustelleinheit 12 weist ein Stößelrohr 34 auf, in dem der Stößel 14 angeordnet ist. Der Stößel 14 und das Stößelrohr 34 bilden eine feste, gemeinsame Einheit, d.h. sie sind nicht relativ zueinander verschieblich. Zustellbewegungen in und entegegen der Zustellrichtung 18 erfolgen daher gemeinsam. Der Stößel 14 ist wiederum von einem Federelement 36, insbesondere eine Schraubenfeder (Druckfeder) umgeben. Die Zustelleinheit 12 lässt sich mit dem ersten Antrieb 16 verbinden. Hierzu wird der Stößel 14 mit dem dargestellten Gewinde mit einer entsprechenden Antriebsstange des ersten Antriebs 16 verbunden und bildet mit dieser insgesamt einen Antriebsstößel aus.

Der Bauteilträger 20 ist insgesamt rohr- oder hülsenförmig ausgebildet und weist eine Bauteilauflage 38 auf, die durch eine vordere Stirnfläche gebildet ist. Auf dieser liegt im Betrieb das Werkstück 6 auf. Der Bauteilträger 20 ist am unteren Arm des bogenförmigen Werkzeugträgers 8 befestigt und insbesondere in einem sich in Zustellrichtung 18 erstreckenden Kanal 40 eingesetzt. Innerhalb dieses Kanals ist ein Zentrierstift 42 angeordnet, welcher mit Hilfe eines dritten Antriebs 44 in und entgegen der Zustellrichtung 18 verstellbar ist. Bei diesem dritten Antrieb 44 kann es sich um einen gesteuerten aktiven Antrieb oder auch um einen passiven Antrieb handeln, der beispielsweise lediglich eine Federkraft auf den Zentrierstift 42 ausübt. Bevorzugt handelt es sich um einen gesteuerten Antrieb 44 speziell einen Druckluftantrieb. Weiterhin ist zu erkennen, dass das mechanische Gestänge 26 endseitig über einen Gelenkmechanismus in den Kanal 40 hinein weitergeführt wird. Hierbei handelt es sich insbesondere um einen Kniehebelmechanismus 46.

Fig. 2A zeigt eine Ausgangsstellung, bei der die Vorrichtung 2 relativ zum Werkstück 6 verfahren wird (also entweder die Vorrichtung 2 wird an eine gewünschte Position am Werkstück 6 verfahren oder das Werkstück 6 wird zur Vorrichtung 2 verbracht). Die Zustelleinheit 12 befindet sich in einer zurückgezogenen Ausgangsposition.

Fig. 2B zeigt die Situation während einer ersten Bearbeitungsstufe, bei der eine Lochstanz- sowie eine Lochformoperation durchgeführt werden. Hierzu wird die gesamte Zustelleinheit 12 in Zustellrichtung 18 in eine vordere Einpressposition verfahren. Hierzu wird mittels des ersten Antriebs 16 der Stößel 14 in Zustellrichtung 18 verfahren, so dass die gesamte Zustelleinheit 12 und mit ihr die Setzeinheit 10 verfahren werden. Das Werkstück 6 wird zwischen dem Bauteilträger 20 und der Setzeinheit 10 geklemmt und damit festgehalten. Die Setzeinheit 10 weist hierzu einen Niederhalter 48 auf, der sich innerhalb des Stößelrohrs 34 an dem Federelement 36 abstützt. Er wird also mit der Federkraft des Federelements 36 gegen das Werkstück 6 gepresst. Das Federelement 36 ist entsprechend auch gegenüber der Ausgangsstellung etwas komprimiert.

Im nächsten Schritt erfolgt eine Fixierung des Werkstücks 6 indem der Zentrierstift 42 von unten in das Werkstück 6 eingeführt wird. Die Zustelleinheit 12 verfährt hierbei entgegen der Zustellrichtung 18 in eine Zwischenposition, in der der Niederhalter 48 zumindest noch mit einer Restkraft das Werkstück 6 gegen die Bauteilauflage 38 presst.

Im nächsten Schritt erfolgt eine Zuführung des Verbindungselements 4 von der Seite in einen inneren Kanal der Setzeinheit 10. Hierzu fährt die Zustelleinheit 12 wieder in die rückwärtige Ausgangposition zurück. Das Werkstück 6 wird über den Zentrierstift 22 bezüglich seiner lateralen Lage fixiert.

Im nächsten in Fig. 2E gezeigten Schritt erfolgt schließlich der eigentliche Setzvorgang, bei dem das Verbindungselement 4 in das Werkstück 6 eingepresst wird. Anschließend verfährt die Zustelleinheit 12 wieder in die in Fig. 2A dargestellte Ausgangsposition und der in den Figuren 2A bis 2E dargestellte Arbeitszyklus beginnt von neuem für das nächste Verbindungselement 4.

Von besonderer Bedeutung bei dem hier beschriebenen Verfahren ist die Integration sowohl der Lochstanzs und der Lochformoperation als auch des Einpressvorgangs in einen Arbeitszyklus, wobei während des gesamten Arbeitszykluses immer in der gleichen axialen Ausrichtung gearbeitet wird, das heißt sowohl die Lochstanz- und Lochformoperation als auch das Einpressen des Verbindungselements 4 erfolgen ohne Relativverschiebung zwischen Vorrichtung 2 und Werkstück 6 innerhalb der gleichen axialen Achse. Weiterhin zeichnen sich die Vorrichtung und das Verfahren durch das gleichzeitige Durchführen der Lochstanz- und der Lochformoperation aus, wie nachfolgend noch näher erläutert wird.

Details zum Aufbau der Setzeinheit 10 sowie des Bauteilträgers 20 und der einzelnen Schritte werden nachfolgend im Zusammenhang mit den Figuren 3A bis 3E erläutert:
Die Setzeinheit 10 ist mittels einer Überwurfmutter 50 an dem Stößelrohr 34 angeschraubt. Die Setzeinheit 10 weist mehrere hülsenförmig konzentrisch ineinander angeordnete Teile auf. Dies ist zum einen der Niederhalter 48, welcher wie bereits erwähnt in das Stößelrohr 34 hineinreicht und sich dort an dem Federelement 36 abstützt. Innerhalb des Niederhalters 48 ist weiterhin eine Stempelhülse 52 angeordnet, die mit einem Hülsenkopf 54, welcher im Ausführungsbeispiel im Querschnitt gesehen topfförmig ausgebildet ist, gleitverschieblich im Niederhalter 48 geführt ist. Innerhalb der Stempelhülse 52 ist wiederrum ein (Stanz-)Stempel 56 geführt, welcher ebenfalls hülsenförmig ausgebildet ist. Dieser weist an seinem oberen Ende einen Stempelkopf 58 auf. Dieser ist in seinem unteren Bereich im Querschnitt betrachtet im Ausführungsbeispiel T-förmig ausgebildet und erstreckt sich in den Hülsenkopf 54 hinein und wird von diesem geführt. Ein oberer Bereich des Stempelkopfes 58 wird an der Innenwandung des Niederhalters 48 geführt. Im weiteren Verlauf wird der Stempel 56 im Inneren der Stempelhülse 52 geführt.

Im Kopfbereich weist der Stempelkopf 58 weiterhin eine Ausnehmung auf, durch die seitlich ein insbesondere als Kipphebel 60 ausgebildetes Steuerelement eingreift. Dieses dient zur Betätigung eines Auswerferstifts 62, welcher im Inneren des Stempels 56 geführt ist. Der Kipphebel 60 wird mittels einer außen liegenden Antriebseinheit 64 betätigt. Der Kipphebel 60 ist um eine Kippachse 66 schwenk- oder kippbar und weist entsprechend beidseitig der Kippachse 66 zwei Hebelarme auf, die einerseits mit dem Auswerferstift 62 und andererseits mit der Antriebseinheit 64 verbunden sind.

Der Niederhalter 48 weist an seinem Außenumfang einen ersten Festanschlag 68 auf, der durch ein oder mehrere radial abstehende Stege gebildet ist. Diesem ist an der Zustelleinheit 12 eine Anschlagfläche 70 zugeordnet ist. Dies ist im Wesentlichen eine Stirnfläche der Zustelleinheit 12, speziell die Fläche eines das Stößelrohr 34 stirnseitig verschließenden Ringflansches, welcher mittels der Überwurfmutter 50 gehalten ist. Durch diesen Ringflansch hindurch ist der Niederhalter 48 geführt.

Der Niederhalter 48 selbst nimmt in seinem Inneren den Stößel 14 auf, welcher mit dem Stempel 56, speziell mit dem Stempelkopf 58 zusammenwirkt und im Betrieb während des Setzvorgangs auf diesen eine Axialkraft ausübt.

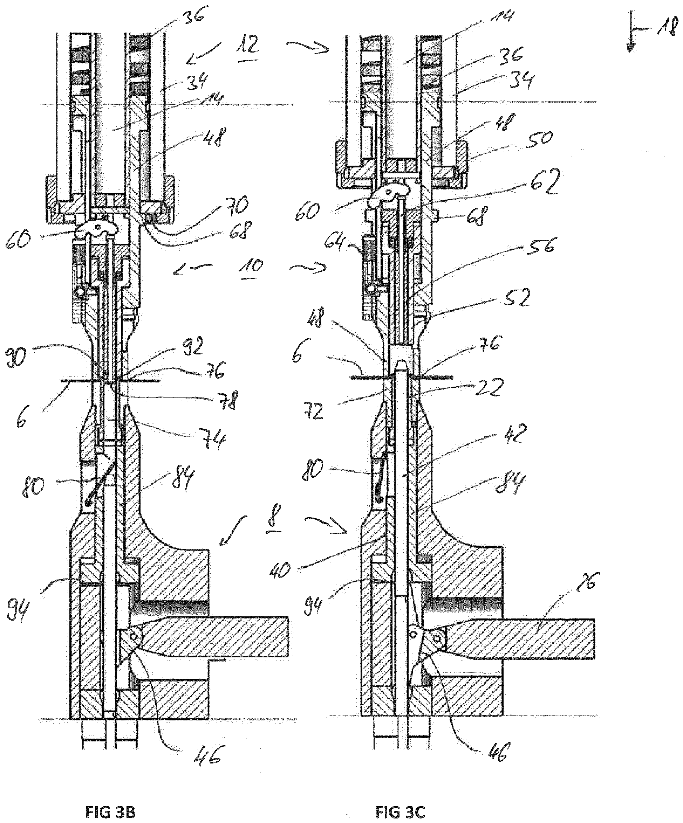

In der unteren Bildhälfte der Figuren 3A bis 3E ist jeweils ein unterer Teilbereich des Werkzeugträgers 8 zu erkennen. In diesem ist der bereits erwähnte, sich in Axialrichtung erstreckende Kanal 40 ausgebildet. Dieser ist im Ausführungsbeispiel stufenförmig ausgebildet. In dessen oberes Ende ist der Bauteilträger 20 eingesetzt. Dieser umfasst einen hülsenförmigen Grundkörper 72, innerhalb dessen die Prägehülse 22 verschieblich angeordnet ist. Die Stirnseite des Grundkörpers 72 definiert eine Bauteilauflage 76. Der freie Innenraum der Prägehülse 22 definiert einen Innenkanal 74 und dient zur Abführung eines Stanzbutzens 78 (vgl. Fig. 3B, 3C). Zu dessen Entsorgung und Abführung ist eine Klappe 80 angeordnet, die in den Innenkanal 74 ein- und ausschwenkbar ist und mit einer seitlichen Öffnung 82 verbunden ist. Ist die Klappe 80 wie in Fig. 3A dargestellt nach innen geklappt, liegt sie an der Innenwandung des Innenkanals 74 an und bildet quasi eine Rampe für den Stanzbutzen 78, der über diese Rampe nach außen entsorgt wird.

An den hülsenförmigen Grundkörper 72 schließt sich eine Führungshülse 84 an, in der der Innenkanal 74 weitergeführt wird. Die Prägehülse 22 stütz sich an der Führungshülse ab. Bei einer Verschiebung der Führungshülse 84 wird die Bewegung daher auf die Prägehülse 22 übertragen. Grundsätzlich besteht auch die Möglichkeit, dass die Führungshülse 84 und die Prägehülse 22 einstückig ausgebildet sind. Die Führungshülse 84 ist innerhalb des Kanals 40 verschieblich angeordnet. Der Innenkanal 74 der Prägehülse 22 wird in der Führungshülse 84 weitergeführt. Die Führungshülse 84 wiederum weist ebenfalls eine seitliche Öffnung auf, die zur seitlichen Öffnung 82 des Werkzeugträgers 8 offen ist.

Die Führungshülse 84 ist komplementär zum Kanal 40 stufenförmig mit einem T-förmigen Fußbereich ausgebildet. Nach unten schließt sich an die Führungshülse 84 ein fest mit dem Werkzeugträger 8 verbundenes Widerlager an, welches einen zweiten Festanschlag 94 definiert.

Innerhalb der Führungshülse 84 ist der Zentrierstift 42 geführt. Dieser wirkt automatisch auf die Klappe 80 ein, wenn er in eine vordere Position geführt wird.

Zur Betätigung und Verschiebung der Prägehülse 22 ist das mechanische Gestänge 26 mit dem endseitig angeordneten Kniehebelmechanismus 46 vorgesehen. Eine Betätigungsstange ist dabei endseitig über ein Kniehebelgelenk mit zwei Hebelarmen des Kniehebelmechanismus 46 verbunden. In Fig. 3A ist die Prägehülse 22 in einer rückgezogenen Position. In dieser ist der Kniehebelmechanismus
46 angewinkelt. In der vorderen Position der Prägehülse 22, die in der Fig. 3B dargestellt ist, ist der Kniehebelmechanismus 46 gestreckt. In dieser gestreckten Position können hohe Kräfte aufgenommen werden, ohne dass diese auf das mechanische Gestänge 26 und über dieses auf den zweiten Antrieb 24 übertragen werden.

Der Arbeitszyklus zum Setzen des Verbindungselements 4 ist wie folgt:
Ausgehend von der in Fig. 3A dargestellten Ausgangsposition erfolgt in einer ersten Stufe gemäß Fig. 3B die Lochstanz- sowie Lochformoperation. Hierzu wird der Stößel 14 in Zustellrichtung 18 mit Hilfe des ersten Antriebs 16 nach Unten gedrückt. Dadurch fährt die gesamte Zustelleinheit 12 nach Unten in die vordere Einpressposition. Sobald der Niederhalter 48 an der Oberfläche des Werkzeugs 6 zum Aufliegen kommt und die Zustellbewegung fortgeführt wird, erfolgt eine Relativverschiebung zwischen Niederhalter 48 und der Stempelhülse 52. Diese wird gemeinsam mit dem Stempel 56 (und dem Auswerferstift 62) bei der weiteren Zustellbewegung nach vorne geführt. Wenn die Stempelhülse 52 mit ihrer vorderen Stirnfläche die Oberfläche des Werkstücks 6 erreicht, wird die Zwangskopplung zwischen Stempelhülse 52 und Stempel 56 aufgelöst und es folgt lediglich noch ein Resthub für den Stempel 56, so dass das Werkstück 6 durchstanzt und ein Loch 90 erzeugt wird. Der bereits erwähnte Stanzbutzen 78 wird wie zuvor beschrieben entsorgt.

Parallel zu dieser Zustellbewegung des Stößels 14 und dem Stanzvorgang wird die Prägehülse 22 mit Hilfe des Kniehebelmechanismus 46 in die vordere Position gebracht. Dies erfolgt vorzugsweise erst nachdem der Niederhalter 48 das Werkstück 6 gegen die Bauteilauflage 76 presst. Speziell befindet sich der Niederhalter 48 in einer Anschlagsposition, bei der der erste Festanschlag 68 an der Anschlagsfläche 70 anliegt, wie dies in Fig. 3B zu erkennen ist. Durch die Betätigung der Prägehülse 22 wird das Werkstück 6 verformt nach Art eines Tiefziehvorgangs. Hierbei wird - entgegen der Zustellrichtung 18 - ein tiefgezogener Kragen 92 ausgebildet, welcher umlaufend zu dem ausgestanzten Loch 90 verläuft. Dieser tiefgezogene Kragen 92 wird auch als Tüllung bezeichnet. Dieser Umformvorgang nach Art eines Tiefziehens wird hier vorliegend als Lochformvorgang bezeichnet. Dieser Lochformvorgang erfolgt dabei im Wesentlichen parallel und zeitgleich zu dem Lochstanzvorgang, d.h. die Steuerung ist derart ausgelegt, dass die Bewegung der Prägehülse 22 und die des Stempels 56 (von Stempelhülse 52 entkoppelte Bewegung) gleichzeitig und gegenläufig erfolgen.

Die Prägehülse 22 bildet allgemein zugleich eine Matrize für den Lochstanzvorgang. Sie weist hierzu einen scharfkantigen vorderen Innenrand auf. Der Stempel 56 fährt beim Stanzvorgang passgenau in die Prägehülse 22 ein.

Zum Auswurf des Stanzbutzens 78 wird weiterhin über die Antriebseinheit 64 der Kipphebel 60 betätigt, so dass der Auswerferstift 62 nach unten gedrückt wird und der Stanzbutzen 78 über die Klappe 80 und die seitliche Öffnung 82 entsorgt wird.

Nach dieser ersten Stufe (Lochstanz-/ und Lochformvorgang) erfolgt zunächst eine laterale Fixierung des Werkstücks 6, indem der Zentrierstift 42 von unten in das Werkstück 6 einfährt und vorzugsweise auch durch dieses hindurch fährt. Der Zentrierstift 42 weist hierzu ein konisches vorderes Ende auf. Der Außendurchmesser des Zentrierstifts 42 entspricht dabei - bis auf erforderliche Toleranzen - dem Innendurchmesser des Lochs 90, so dass eine zuverlässige seitliche Führung und Fixierung gewährleistet ist. Die Verstellung des Zentrierstifts 42 erfolgt mittels des dritten Antriebs 44, beispielsweise pneumatisch gesteuert.

Die Einführung des Zentrierstifts 42 erfolgt dabei während der Niederhalter 48 das Werkstück 6 noch gegen die Bauteilauflage 76 presst. Gleichzeitig ist die Zustelleinheit 12 durch Zurückfahrens des Stößels 14 in die Zwischenposition verfahren, so dass also insbesondere auch die Stempelhülse und der Stempel 56 zurückgezogen wurden, so dass als der Zentrierstift 42 in den freigewordenen Innenraum im Niederhalter 48 eindringen kann.

Ebenso wie die Stempelhülse 52 ist auch die Prägehülse 22 wieder in die zurückgezogene Ausgangsposition zurückgeführt.

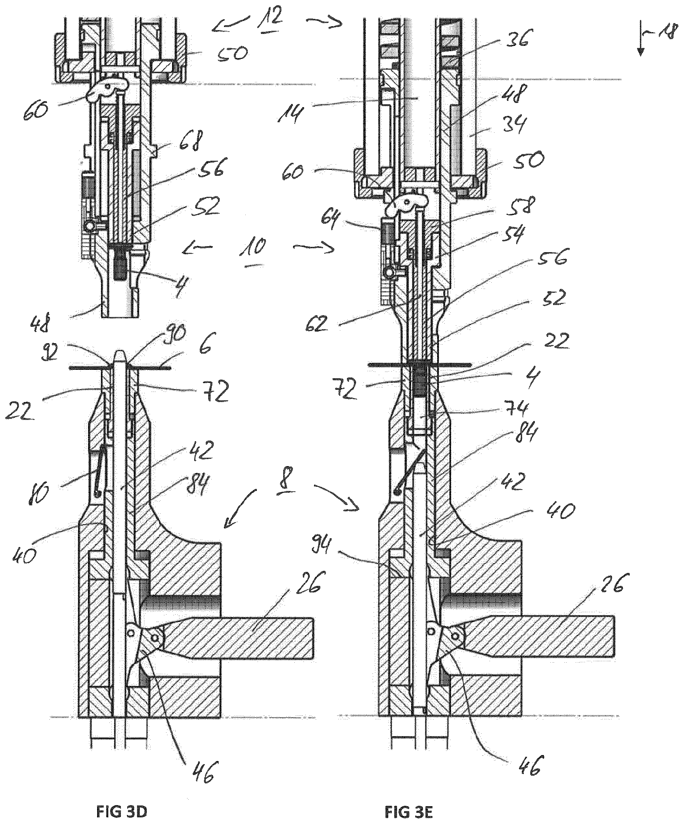

Im nächsten Schritt, der in Fig. 3D dargestellt ist, wird die Zustelleinheit 12 weiter zurückgefahren, insbesondere in die Ausgangsposition. In dieser wird das Verbindungselement 4, also der Einpressbolzen über eine seitliche Öffnung im Niederhalter 48 in einen Setzkanal der Setzeinheit 10, eingeführt. In der Ausgangsposition ist dabei ein unterer Teilabschnitt des Niederhalters 48 freigegeben, d. h. die Stempelhülse 52 ist ausreichend weit zurückgeführt.

Zur Durchführung des Einpressvorgangs, der in der Fig. 3E dargestellt ist, verfährt der Stößel 14 und damit die Zustelleinheit 12 wieder in Zustellrichtung 18. Nunmehr dient die Stempelhülse 52 mit dem Stempel 56 als Einpressstempel für das Verbindungselement 4. Die Stirnseite der Stempelhülse 52 sowie des Stempels 56 fluchten vorzugsweise miteinander, bilden also eine gemeinsame Stempelfläche, die auf einen Kopf des Verbindungselements 4 einwirken. Durch Ausüben einer Einpresskraft über den Stößel 14, die über die Stempelhülse 52 auf das Verbindungselement 4 übertragen wird, wird dieses in das vorgelochte Werkstück 6 eingepresst. Der Kopf des Verbindungselements 4 kommt dabei zur Auflage auf einen Lochrand des Lochs 90. Der Kopf wird gegen den tiefgezogenen bzw. hochgezogenen Kragen 92 gepresst. An der Unterseite des Kopfes ist üblicherweise eine spezielle Unterkopfgeometrie ausgebildet. Durch die Verpressung des Kragens 92 mit dem Kopf erfolgt eine Materialumformung, so dass eine Form- und kraftschlüssige Verbindung zwischen dem als Einpresselement ausgebildeten Verbindungselement 4 und dem Material des Kragens 92 erfolgt. Insbesondere erfolgt durch eine formschlüssige Materialverschränkung sowohl eine axiale Auszugssicherung, als auch eine Verdrehsicherung.

Bei diesem Einpressvorgang treten wiederum hohe Kräfte auf, welche von dem Bauteilträger 20 abgefangen werden müssen. Von besonderer Bedeutung ist auch, dass der Stirnrand der Prägehülse 22 ein Gegenlager für den Umformvorgang während des Einpressens bildet. Um die bestehenden Kräfte zuverlässig aufzunehmen, stützt sich die Prägehülse 22 in ihrer zurückgezogenen Position an dem zweiten mechanischen Festanschlag 94 ab. Wie aus den Fig. 3A, 3C, 3D sowie 3E zu entnehmen ist, die allesamt Situationen zeigen, bei denen die Prägehülse 22 in ihrer zurückgezogenen Situation ist, ist dieser zweite mechanischer Festanschlag 94 durch ein Bauteil (Hülse) innerhalb des Werkzeugträgers 8 gebildet. Dieses Bauteil ist innerhalb des Werkzeugträgers 8 ortsfest angeordnet. Die Prägehülse 22 stütz sich dabei über die Führungshülse 84 mittelbar an dem zweiten Festanschlag 94 ab.

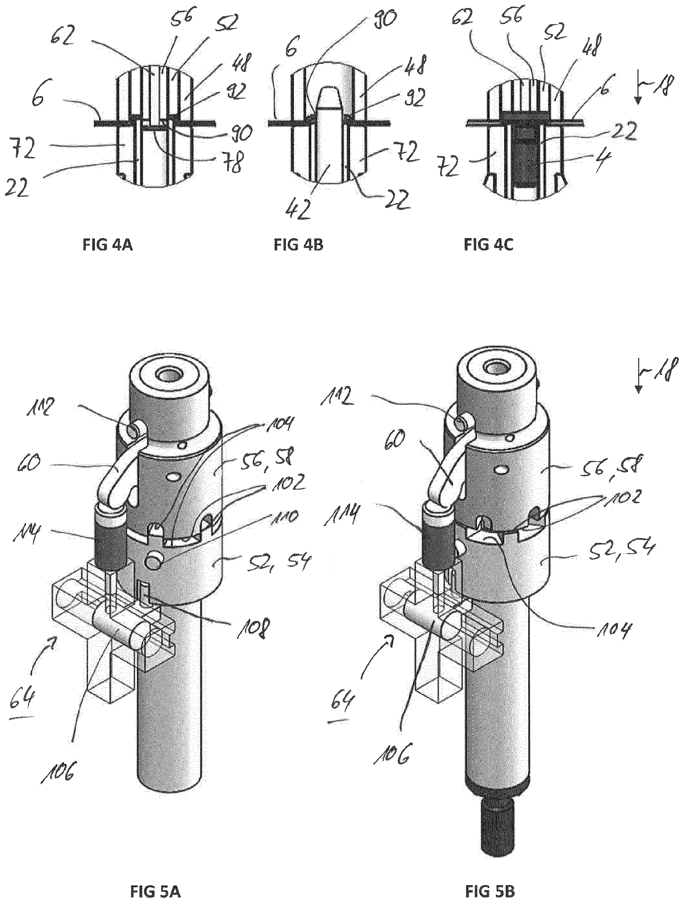

In der zurückgezogenen Position wirkt die vordere ringförmige Stirnfläche der Prägehülse 22 allgemein als ein Widerlager. Die Stirnfläche der Prägehülse 22 befindet sich in der zurückgezogenen Position auf vergleichbarer axialer Höhe wie die Bauteilauflage 76. Hierunter wird verstanden, dass die Stirnfläche der Prägehülse 22 mit der Bauteilauflage 76 fluchtet oder alternativ geringfügig, beispielsweise um die Hälfte der Bauteildicke des Werkstücks 6, über die Bauteilauflage 76 übersteht. Dies ist insbesondere auch anhand der Fig. 4A, 4b sowie 4c zu erkennen, welche vergrößerte Darstellungen im Bereich des Lochs 90 beim Lochform- / Lochstanzvorgang (Fig. 4A), dem Fixierschritt (Fig. 4B) sowie dem Einpressschritt (Fig. 4C) zeigen:
Anhand der Fig. 4A ist zu erkennen, dass die Prägehülse 22 in ihrer vorderen Position ist und den Kragen 92 ausgeformt hat. Gleichzeitig ist zu erkennen, dass der Niederhalter 48 das Werkstück 6 gegen die Bauteilauflage 76 des Grundkörpers 72 presst. Vorzugsweise weisen Niederhalter 48 und Grundkörper 72 den gleichen Außendurchmesser auf und fluchten außenseitig miteinander. Weiterhin ist das untere Stirnende der Stempelhülse 52 zu erkennen, welches vorzugsweise auf der oberen Seite des Kragens 92 zum Aufliegen kommt. Die Prägehülse 22 presst daher den Kragen 92 gegen den unteren Stirnrand der Stempelhülse 52 (nicht zwingend erforderlich). Weiterhin ist zu erkennen, dass für den Lochstanzvorgang der axiale Hub des Stempels 56 von der Stempelhülse 52 entkoppelt ist, so dass also das vordere Stirnende des Stempels 56 in Zustellrichtung 18 weiter vorsteht. Weiterhin ist zu erkennen, dass der Auswerferstift 62 auf den Stanzbutzen 78 einwirkt und bereits über den Stempel 56 übersteht. In den Fig. 4 B, 4C ist die zurückgezogene Position der Prägehülse 22 zu erkennen, die geringfügig entgegen der Zustellrichtung gegen die Bauteilauflage 76 übersteht und etwa bis zur halben Dicke des Werkstücks 6 (bei mehreren Werkstücken der Gesamtdicke derselben) in das Loch 90 eindringt. Der Zentrierstift 42 ist durch das Loch 90 hindurch geführt.

Anhand der Fig. 4C ist weiterhin zu erkennen, dass zum Einpressen des Stempels 56, der Stempelhülse 52 sowie der Auswerferstift 62 (nicht zwingend erforderlich) eine gemeinsame Stirnfläche bilden, welche auf den Kopf des Verbindungselements 4 einwirkt und dieses in das vorgestanzte Loch 90 einpressen. Im eingepressten Zustand liegt der Kopf auf dem Lochrand auf und der hochgezogene Kragen 92 ist wieder verformt.

Wie zuvor erläutert, werden Stempel 56 und Stempelhülse 52 hubwegabhängig zwangsgeführt bzw. eine mechanische Zwangsführung wird hubwegabhängig aufgelöst. Dies ist erforderlich, um für den Stanzvorgang eine entkoppelte Bewegung zwischen Stempelhülse 52 und Stempel 56 zu ermöglichen. Es ist daher erforderlich, dass die mechanische Zwangskopplung für den erforderlichen Stanzhub aufgehoben wird.

Der hierzu vorgesehene Mechanismus wird im Zusammenhang mit den Fig. 5A und 5B näher erläutert. Eine axiale Zwangsführung wird dadurch ausgebildet, dass der Stempel 56 und die Stempelhülse 52 in einem Mitnehmerbereich zueinander korrespondierende Mitnehmeranschläge, nämlich vordere Mitnehmeranschläge 102 und rückwärtige Mitnehmeranschläge 104 aufweisen. Unter vordere Mitnehmeranschläge 102 werden dabei jeweils die in Richtung zum anderen Bauteil orientierten Anschlagsflächen verstanden.

Die rückwärtigen Mitnehmeranschläge 104 sind dem gegenüber in axialer Richtung versetzt angeordnet. Speziell sind die Mitnehmeranschläge 102,104 durch Vorsprünge beziehungsweise Rücksprünge ausgebildet. Speziell ist jeweils eine zinnenartige Ausbildung vorgesehen. Bei der Zustellbewegung in Zustellrichtung 18 wird über die Mitnehmeranschläge 102 die Kraft zwischen den beiden Bauteilen Stempel 56 und Stempelhülse 52 übertragen. Hierbei liegen die vorderen Mitnehmeranschläge 102 aneinander an.

Um für den Stanzvorgang eine entkoppelnde Bewegung zu ermöglichen, ist eine Relativverdrehung zwischen Stempel 56 und Stempelhülse 52 vorgesehen, so dass die vorderen Mitnehmeranschläge 102 außer Eingriff gebracht werden. Die einzelnen zinnenförmigen Erhebungen können daher in die korrespondierenden Ausbuchtungen am anderen Bauteil eingreifen. Die axiale Höhe der Ausbuchtungen bzw. der Zinnen definiert dabei einen maximalen Hubweg, innerhalb dessen die Bewegungen des Stempel 56 und der Stempelhülse 52 entkoppelt sind. Die gekoppelte Situation, bei der die vorderen Mitnehmeranschläge 102 aufeinander liegen, ist in Figur 5B dargestellt, die entkoppelte Position nach einer Verdrehung in Figur 5A. Gut zu erkennen ist, dass die entgegen der Zustellrichtung 18 nach oben abstehenden Zinnen der Stempelhülse 52 in die korrespondierenden Aufnahmen am Stempel 56 eingreifen. Die Mitnehmeranschläge 102, 104 sind vorzugsweise jeweils im Bereich des Hülsenkopfes 54 sowie des Stempelkopfes 58 ausgebildet.

Die Verdrehung dieser Bauteile zueinander wird aktiv mittels der Antriebseinheit 64 vorgenommen. Diese umfasst ein Schieberelement 106 welches zwischen zwei Endlagen hin und her verschoben werden kann. Über einen Mitnehmer 108, welcher insbesondere als Pin / Mitnehmerstift ausgebildet ist, wird diese Schiebebewegung auf die Stempelhülse 52 zur Ausübung einer Drehbewegung übertragen.

Wie weiterhin zu entnehmen ist, weist die Stempelhülse 52 ein speziell als Zapfen 110 ausgebildetes Führungselement, welches radial nach außen absteht. Dieses wird innerhalb des Niederhalters 48 in einer korrespondierenden Führungsnut bis zu einer definierten axialen Hubposition zwangsgeführt, sodass eine Verdrehung erst ab einer vorgegebenen axialen Hochposition möglich ist. Diese verdrehsichere Führung gewährleistet zudem, dass der Mitnehmer 108 zuverlässig in die zugeordnete Ausnehmung der Stempelhülse 52 eingreift. Ein weiterer Zapfen 112, der am Stempelkopf 56 radial abstehend angeordnet ist sorgt in ähnlicher Weise für eine Verdrehsicherung des Stempels 56.

Die Antriebeinheit 64 weist ergänzend neben dem Schieberelement 106 eine Lineareinheit 114, insbesondere mit einer Kolben / Zylindereinheit auf, über die der Kipphebel 60 betätigbar ist.

Der hier zu den Figuren 5A, 5B beschriebe Aspekt der Zwangskopplung und der Ausübung der Drehbewegung mit Hilfe des Schieberelements 106 wird als eine eigenständige erfinderische Lösung angesehen.

### Bezugszeichenliste

- 2: Vorrichtung
- 4: Verbindungsteil / Verbindungselement
- 6: Bauteil oder Werkstück
- 8: Werkzeugträger
- 10: Setzeinheit
- 12: Zustelleinheit
- 14: Stößel
- 16: erster Antrieb
- 18: Zustellrichtung
- 20: Bauteilträger
- 22: Prägehülse
- 24: zweiter Antrieb
- 26: Gestänge
- 28: Steuervorrichtung
- 30: Zuführeinheit
- 32: Schlauch
- 34: Stößelrohr
- 36: Federelement
- 38: Bauteilauflage
- 40: Kanal
- 42: Zentrierstift
- 44: dritter Antrieb
- 46: Kniehebelmechanismus
- 48: Niederhalter
- 50: Überwurfmutter
- 52: Stempelhülse
- 54: Hülsenkopf
- 56: (Stanz-)Stempel
- 58: Stempel kopf
- 60: Kipphebel
- 62: Auswerferstift
- 64: Antriebseinheit
- 66: Kippachse
- 68: erster Festanschlag
- 70: Anschlagfläche
- 72: Grundkörper
- 74: Innenkanal
- 76: Bauteilauflage
- 78: Stanzbutzen
- 80: Klappe
- 82: seitliche Öffnung
- 84: Führungshülse
- 90: Loch
- 92: Kragen
- 94: zweiter Festanschlag
- 102: vordere Mitnehmeranschläge
- 104: hintere Mitnehmeranschläge
- 106: Schieberelement
- 108: Mitnehmer
- 110: Zapfen
- 112: weiterer Zapfen
- 114: Lieneareinheit

## Patentansprüche

1. Vorrichtung (2) zur Durchführung eines Setzvorgangs zum Setzen eines Verbindungselements (4), insbesondere eines Einpressbolzens an einem Werkstück,
- mit einer Steuervorrichtung (28) zur Steuerung des Setzvorgang im Betrieb,
- mit einer Setzeinheit (10), die an einem Werkzeugträger (8) befestigt ist und die mit Hilfe einer Zustelleinheit (12) in einer Zustellrichtung (18) verfahrbar ist,
- und mit einem Bauteilträger (20), der gegenüberliegend zur Setzeinheit (10) am Werkzeugträger (8) befestigt ist und gegen den die Setzeinheit (10) in Zustellrichtung (18) verfahrbar ist,
wobei die Setzeinheit (10) aufweist
-- einen Niederhalter (48), mit dessen Hilfe das Werkstück (6) im Betrieb gegen den Bauteilträger (20) gepresst wird
-- einen Stempel (56), der in Zustellrichtung (18) relativ zum Niederhalter (48) verfahrbar ist zum Stanzen eines Loches in das Werkstück (6)
-- eine Stempelhülse (52) zum Einpressen des Verbindungselements (4) in das Loch (90)
wobei der Bauteilträger (20) aufweist
-- einen Grundkörper (72) mit einer Bauteilauflage (38) für das Werkstück (6),
-- eine im Grundkörper (92) verschieblich angeordnete Prägehülse (22),
**dadurch gekennzeichnet, dass** die Steuervorrichtung (28) derart ausgebildet ist, dass im Betrieb in einem mehrstufigen Setzvorgang in einer ersten Stufe eine Lochstanz- und Lochformoperation zur Ausbildung des Lochs (90) mit einem umlaufend um das Loch (90) entgegen der Zustellrichtung (18) tiefgezogenen Kragen (92) und in einer zweiten Stufe ein Setzvorgang des Verbindungselements (4) erfolgt, wobei zwischen den zwei Stufen keine laterale Relativbewegung zwischen dem Werkstück (6) und der Vorrichtung (2) erfolgt und wobei die Prägehülse (22) zur Ausbildung des tiefgezogenen Kragens (92) von unten gegen das Werkstück (6) verfahren wird.

2. Vorrichtung (2) nach dem vorhergehenden Anspruch, bei der die Steuervorrichtung (28) derart ausgebildet ist, dass die Lochstanz- und die Lochformoperation gleichzeitig erfolgen.

3. Vorrichtung (2) nach einem der vorhergehenden Ansprüche, bei der die Steuervorrichtung (28) derart ausgebildet ist, dass Stempelhülse (52) ein Widerlager für die Prägehülse (22) bei der Lochformoperation bildet.

4. Vorrichtung (2) nach einem der vorhergehenden Ansprüche, bei der innerhalb der Prägehülse (22) ein Zentrierstift (42) entgegen der Zustellrichtung (18) verfahrbar ist, wobei die Steuervorrichtung (28) derart ausgebildet ist, dass nach der ersten Stufe der Zentrierstift (42) in das erzeugte Loch (90) verfahren wird.

5. Vorrichtung (2) nach einem der vorhergehenden Ansprüche, bei der die Prägehülse (22) mit Hilfe eines mechanischen Gestänges (26) verfahrbar ist und bei der das mechanische Gestänge (26) einen Kniehebelmechanismus (46) aufweist und die Prägehülse(22) durch eine Betätigung des Kniehebelmechanismus (46) zur Ausbildung des tiefgezogenen Kragens (92) gegen das Werkstück (6) verfahren wird.

6. Vorrichtung (2) nach einem der vorhergehenden Ansprüche, bei der die Steuervorrichtung (28) derart ausgebildet ist, dass die Prägehülse (22) vor dem Einpressen des Verbindungselements (4) in eine rückgezogene Position zurückverfahren wird und dort insbesondere ein Widerlager für das Verbindungselement (4) beim Setzvorgang ausbildet.

7. Vorrichtung (2) nach dem vorhergehenden Anspruch, bei der die Prägehülse (22) gegen einen zweiten Festanschlag (94) in die zurückgezogene Position verfahrbar ist.

8. Vorrichtung (2) nach einem der vorhergehenden Ansprüche, bei der der Niederhalter (48) einen ersten Festanschlag (68) aufweist, welcher bei der Lochstanz- und Lochformoperation an einer Anschlagfläche (70) der Zustelleinheit anliegt.

9. Vorrichtung (2) nach einem der vorhergehenden Ansprüche, bei der die Zustelleinheit (12) einen Stößel (14), ein Federelement (36) sowie ein Stößelrohr (34) aufweist, welches den Stößel (14) und das Federelement (36) aufnimmt, wobei die Setzeinheit (10) am Stößelrohr (34) befestigt ist, der Stößel (14) gegen den Stempel (56) verfährt, das Federelement (36) auf den Niederhalter (48) einwirkt und weiterhin der Stempel (56) als eine Hülse ausgebildet ist, in dem ein Auswerferstift (62) relativverschieblich zur Stempelhülse (52) geführt ist.

10. Vorrichtung (2) nach einem der vorhergehenden Ansprüche, wobei bei der Stempel (56) und die Stempelhülse (52) über eine axiale Zwangsführung für eine gemeinsame Zustellbewegung in Zustellrichtung (18) miteinander verbunden sind, wobei die axiale Zwangsführung gesteuert aufhebbar ist, so dass für die Lochstanzoperation der Stempel (56) relativ zur Stempelhülse (52) verfahrbar ist, wobei die Stempelhülse (52) und der Stempel (56) gegeneinander verdrehbar sind, so dass in einer vorgegebenen Drehposition die axiale Zwangsführung aufgehoben ist und der Stempel (56) zur Ausführung der Lochstanzoperation relativ zur Stempelhülse (52) verfahrbar ist.

11. Vorrichtung (2) nach Anspruch 10, bei der die Stempelhülse (52) und der Stempel (56) mit Hilfe einer Antriebseinheit (64) gegeneinander verdrehbar sind, wobei die Verdrehung mit Hilfe eines Mitnehmers (108) erfolgt, der in die Stempelhülse (52) oder den Stempel (56) eingreift.

12. Vorrichtung (2) nach einem der Ansprüche 10 bis 11, bei der die Stempelhülse (52) in Zustellrichtung (18) innerhalb des Niederhalters (48) verdrehsieher bis zu einer vorgegebenen Axialposition geführt ist, an der die axiale Zwangsführung durch Verdrehung der Stempelhülse (52) aufhebbar ist.

13. Vorrichtung (2) nach einem der Ansprüche 10 bis 12, bei der an der Stempelhülse (52) und am Stempel (56) vordere und zurückgezogene Mitnehmeranschläge (102,104) ausgebildet sind, wobei die vorderen Mitnehmeranschläge (102) zum Lösen der Zwangsführung durch die Verdrehung außer Eingriff gebracht werden.

14. Vorrichtung (2) nach einem der vorhergehenden Ansprüche, bei der die Steuervorrichtung (28) derart eingerichtet ist, dass folgenden Schritte ausgeführt werden:
a) in einer Ausgangsstellung liegt das Werkstück (6) auf der Bauteilauflage (76) auf,
b) die Setzeinheit (10) verfährt in Zustellrichtung (18) und der Niederhalter (48) presst das Werkzeug gegen die Bauteilauflage (76) und es wird die Lochstanz- sowie Lochformoperation ausgeführt,
c) die Position des Werkzeugs wird durch Einfahren eines Zentrierstifts (42) fixiert,
d) Rückstellen der Setzeinheit (10) entgegen der Zustellrichtung (18) sowie Zuführung des Verbindungselements (4) in die Setzeinheit (10),
e) Zustellen der Setzeinheit (10) in Zustellrichtung und Einpressen des Verbindungselements (4),
f) Rückführen in die Ausgangsstellung.

15. Verfahren zum Setzen eines Verbindungselements (4) an einem Werkstück mit Hilfe einer Vorrichtung (2), die eine Setzeinheit (10) mit einem Niederhalter (48) sowie eine der Setzeinheit (10) gegenüberliegenden Bauteilträger (20) mit einer Bauteilauflage (76) aufweist, mit folgenden Schritten:
- Durchführen einer Lochstanz- sowie Lochformoperation in einer ersten Stufe, in der
-- das Werkstück (6) zwischen dem Niederhalter (48) und der Bauteilauflage (76) eingeklemmt wird,
-- ein Loch (90) mit Hilfe eines Stempels (56) der Setzeinheit (10) gestanzt wird, welcher relativ zum Niederhalter (48) in Zustellrichtung (18) verfahren wird
-- ein entgegen der Zustellrichtung (18) tiefgezogener, um das Loch (90) umlaufender Kragen (92) mit Hilfe einer Prägehülse (22) ausgebildet wird, die im Bauteilträger (20) angeordnet ist und entgegen der Zustellrichtung (18) verfahren wird,
- Einpressen des Verbindungselements (4) in das Loch (90) in einer zweiten Stufe mit Hilfe der Setzeinheit (10), wobei zwischen den zwei Stufen keine laterale Relativbewegung zwischen dem Werkstück (6) und der Vorrichtung (2) erfolgt.

## Claims

1. Device (2) for carrying out a placing procedure for placing a connecting element (4), in particular a press-fit stud, on a workpiece,
- having a control device (28) for controlling the placing procedure during the operation;
- having a placing unit (10) which is fastened to a tool carrier (8) and which with the aid of an actuating unit (12) is repositionable in an actuating direction (18);
- and having a component carrier (20) which on the tool carrier (8) is fastened opposite the placing unit (10) and towards which the placing unit (10) is repositionable in the actuating direction (18); wherein the placing unit (10) has
- a blank holder (48) with the aid of which the workpiece (6) during the operation is pressed against the component carrier (20);
- a punch (56) which, for punching a hole into the workpiece (6), in the actuating direction (18) is repositionable relative to the blank holder (48);
- a punching sleeve (52) for press-fitting the connecting element (4) in the hole (90);
wherein the component carrier (20) has
- a main body (72) having a component support (38) for the workpiece (6);
- an embossing sleeve (22) which is disposed so as to be displaceable in the main body (92),
**characterized in that**
the control device (28) is configured in such a manner that, during the operation in a multi-stage placing procedure, in a first stage a hole-punching and hole-forming operation for configuring the hole (90) with a collar (92) that encircles the hole (90) and is deep-drawn counter to the actuating direction (18) takes place, and in a second stage a placing procedure of the connecting element (4) takes place, wherein no lateral relative movement between the workpiece (6) and the device (2) takes place between the two stages, and wherein the embossing sleeve (22) for configuring the deep-drawn collar (92) is repositioned against the workpiece (6) from below.

2. Device (2) according to the preceding claim, wherein the control device (28) is configured in such a manner that the hole-punching and the hole-forming operation take place simultaneously.

3. Device (2) according to one of the preceding claims, wherein the control device (28) is configured in such a manner that the punching sleeve (52) during the hole-forming operation forms a counter bearing for the embossing sleeve (22).

4. Device (2) according to one of the preceding claims, wherein a centring pin (42) within the embossing sleeve (22) is repositionable counter to the actuating direction (18), the control device (28) being configured in such a manner that after the first stage the centring pin (42) is repositioned into the generated hole (90).

5. Device (2) according to one of the preceding claims, wherein the embossing sleeve (22) is repositionable with the aid of a mechanical linkage (26) and wherein the mechanical linkage (26) has a toggle lever mechanism (46) and the embossing sleeve (22) for configuring the deep-drawn collar (92) is repositioned against the workpiece (6) by activating the toggle lever mechanism (46).

6. Device (2) according to one of the preceding claims, wherein the control device (28) is configured in such a manner that the embossing sleeve (22) prior to press-fitting the connecting element (4) is repositioned back to a retracted position and in the latter configures in particular a counter bearing for the connecting element (4) during the placing procedure.

7. Device (2) according to the preceding claim, wherein the embossing sleeve (22) is repositionable to the retracted position against a second fixed detent (94).

8. Device (2) according to one of the preceding claims, wherein the blank holder (48) has a first fixed detent (68) which during the hole-punching and hole-forming operation bears on a detent face (70) of the actuating unit.

9. Device (2) according to one of the preceding claims, wherein the actuating unit (12) has a tappet (14), a spring element (36) as well as a tappet tube (34) which receives the tappet (14) and the spring element (36), the placing unit (10) being fastened to the tappet tube (34), the tappet (14) repositioning against the punch (56), the spring element (36) acting on the blank holder (48), and the punch (56) furthermore being configured as a sleeve in which an ejector pin (62) is guided so as to be displaceable relative to the punching sleeve (52).

10. Device (2) according to one of the preceding claims, wherein the punch (56) and the punching sleeve (52) for a conjoint actuating movement in the actuating direction (18) are connected to one another by way of an axial positive guiding action, wherein the axial positive guiding action is able to be cancelled in a controlled manner such that the punch (56) for the hole-punching operation is repositionable relative to the punching sleeve (52), wherein the punching sleeve (52) and the punch (56) are mutually rotatable such that the axial positive guiding action is cancelled at a predefined rotary position and the punch (56) for carrying out the hole-punching operation is repositionable relative to the punching sleeve (52).

11. Device (2) according to Claim 10, wherein the punching sleeve (52) and the punch (56) are mutually rotatable with the aid of a drive unit (64), the rotation taking place with the aid of a dog (108) which engages in the punching sleeve (52) or the punch (56).

12. Device (2) according to one of Claims 10 to 11, wherein the punching sleeve (52) within the blank holder (48) is guided in the actuating direction (18) so as to be secured against rotation up to a predefined axial position at which the axial positive guiding action is able to be cancelled by rotating the punching sleeve (52) .

13. Device (2) according to one of Claims 10 to 12, wherein front and retracted dog detents (102, 104) are configured on the punching sleeve (52) and on the punch (56), the front dog detents (102) by the rotation being brought to disengage so as to release the positive guiding.

14. Device (2) according to one of the preceding claims, wherein the control device (28) is specified in such a manner that the following steps are carried out:
a) the workpiece (6) in an initial position bears on the component support (76);
b) the placing unit (10) repositions in the actuating direction (18), and the blank holder (48) presses the tool against the component support (76), and the hole-punching and hole-forming operation is carried out;
c) the position of the tool is fixed by driving in a centring pin (42);
d) resetting the placing unit (10) counter to the actuating direction (18) as well as feeding the connecting element (4) into the placing unit (10);
e) actuating the placing unit (10) in the actuating direction, and press-fitting the connecting element (4);
f) returning to the initial position.

15. Method for placing a connecting element (4) on a workpiece with the aid of a device (2) which has a placing unit (10) having a blank holder (48) as well as a component carrier (20) which has a component support (76) and lies opposite the placing unit (10), said method comprising the following steps:
- carrying out a hole-punching and hole-forming operation in a first stage in which
- the workpiece (6) is jammed between the blank holder (48) and the component support (76);
- a hole (90) is punched with the aid of a punch (56) of the placing unit (10) that in the actuating direction (18) is repositioned relative to the blank holder (48);
- a collar (92) that encircles the hole (90) and is deep-drawn counter to the actuating direction (18) is configured with the aid of an embossing sleeve (22) which is disposed in the component carrier (20) and repositioned counter to the actuating direction (18);
- press-fitting the connecting element (4) in the hole (90) with the aid of the placing unit (10) in a second stage, wherein no lateral relative movement between the workpiece (6) and the device (2) takes place between the two stages.

## Revendications

1. Dispositif (2) destiné à mettre en œuvre un processus de placement pour placer un élément de liaison (4), en particulier un boulon à enfoncer, au niveau d'une pièce, ledit dispositif comprenant
- un dispositif de commande (28) destiné à commander le processus de placement pendant le fonctionnement,
- une unité de placement (10) qui est fixée à un porte-outil (8) et qui peut être déplacée dans un sens d'approche (18) à l'aide d'une unité d'approche (12),
- et un support de composant (20) qui est fixé au porte-outil (8) à l'opposé de l'unité de placement (10) et vers lequel l'unité de placement (10) peut être déplacée dans le sens d'approche (18),
l'unité de placement (10) comportant
- un élément de retenue (48) à l'aide duquel la pièce (6) est pressée contre le support de composant (20) pendant le fonctionnement,
- un poinçon (56) qui peut être déplacé dans le sens d'approche (18) par rapport à l'élément de retenue (48) pour ménager un trou par perforation de la pièce (6),
- une douille de poinçonnage (52) destinée à enfoncer l'élément de liaison (4) dans le trou (90), le support de composant (20) comportant
- un corps de base (72) pourvu d'un support de composant (38) destiné à la pièce (6),
- une douille de matriçage (22) disposée de manière coulissante dans le corps de base (92),
**caractérisé en ce que**
le dispositif de commande (28) est conçu de telle sorte que, pendant le fonctionnement, dans un processus de placement à plusieurs étapes, une opération de perforation et une opération de mise en forme de trou soient effectuées dans une première étape pour doter le trou (90) d'une collerette (92) emboutie circulairement autour du trou (90) dans le sens opposé au sens d'approche (18) et un processus de placement de l'élément de liaison (4) soit effectué dans une deuxième étape, aucun mouvement relatif latéral entre la pièce (6) et le dispositif (2) n'étant effectué entre les deux étapes et la douille de matriçage (22) étant déplacée depuis le bas vers la pièce (6) afin de former la collerette emboutie (92).

2. Dispositif (2) selon la revendication précédente, dans lequel le dispositif de commande (28) est conçu de telle sorte que l'opération de perforation et l'opération de mise de forme de trou soient effectuées simultanément.

3. Dispositif (2) selon l'une des revendications précédentes, dans lequel le dispositif de commande (28) est conçu de telle sorte que la douille de poinçonnage (52) forme une butée pour la douille de matriçage (22) lors de l'opération de mise en forme de trou.

4. Dispositif (2) selon l'une des revendications précédentes, dans lequel une tige de centrage (42) peut être déplacée dans le sens opposé au sens d'approche (18) à l'intérieur de la douille de matriçage (22), le dispositif de commande (28) étant conçu de telle sorte que, après la première étape, la tige de centrage (42) est déplacée jusque dans le trou (90) ménagé.

5. Dispositif (2) selon l'une des revendications précédentes, dans lequel la douille de matriçage (22) peut être déplacée à l'aide d'un ensemble de tringles mécanique (26) et dans lequel l'ensemble de tringles mécanique (26) comporte un mécanisme à genouillère (46) et la douille de matriçage (22) est déplacée vers la pièce (6) par actionnement du mécanisme à genouillère (46) afin de former la collerette emboutie (92).

6. Dispositif (2) selon l'une des revendications précédentes, dans lequel le dispositif de commande (28) est conçu de telle sorte que, avant d'enfoncer l'élément de liaison (4), la douille de matriçage (22) soit ramenée dans une position reculée où elle forme pendant le processus de placement notamment une butée destinée à l'élément de liaison (4).

7. Dispositif (2) selon la revendication précédente, dans lequel la douille de matriçage (22) peut être déplacée jusque dans la position reculée contre une deuxième butée fixe (94).

8. Dispositif (2) selon l'une des revendications précédentes, dans lequel l'élément de retenue (48) comporte une première butée fixe (68) qui vient en appui contre une surface de butée (70) de l'unité d'approche lors l'opération de perforation et l'opération de mise en forme de trou.

9. Dispositif (2) selon l'une des revendications précédentes, dans lequel l'unité d'approche (12) comporte un plongeur (14), un élément à ressort (36) et un tube plongeur (34) qui reçoit le plongeur (14) et l'élément à ressort (36), l'unité de placement (10) étant fixée au tube de plongeur (34), le plongeur (14) se déplaçant vers le poinçon (56), l'élément à ressort (36) agissant sur l'élément de retenue (48) et en outre le poinçon (56) étant conçu comme une douille dans laquelle une tige d'éjection (62) est guidée de manière à pouvoir effectuer un coulissement relatif par rapport à la douille de poinçonnage (52).

10. Dispositif (2) selon l'une des revendications précédentes, le poinçon (56) et la douille de poinçonnage (52) étant reliés l'un à l'autre par un guidage forcé axial permettant d'effectuer un mouvement d'approche commun dans le sens d'approche (18), le guidage forcé axial pouvant être supprimé de manière commandée de sorte que le poinçon (56) puisse être déplacé par rapport à la douille de poinçonnage (52) pour effectuer l'opération de perforation, la douille de poinçonnage (52) et le poinçon (56) pouvant tourner l'un par rapport à l'autre de sorte que le guidage forcé axial soit supprimé dans une position de rotation spécifiée et que le poinçon (56) puisse être déplacé par rapport à la douille de poinçonnage (52) afin d'effectuer l'opération de perforation.

11. Dispositif (2) selon la revendication 10, dans lequel la douille de poinçonnage (52) et le poinçon (56) peuvent être tournés l'un par rapport à l'autre à l'aide d'une unité d'entraînement (64), la rotation étant effectuée à l'aide d'un entraîneur (108) qui s'engage dans la douille de poinçonnage (52) ou le poinçon (56).

12. Dispositif (2) selon l'une des revendications 10 et 11, dans lequel la douille de poinçonnage (52) est guidée dans le sens d'approche (18) à l'intérieur de l'élément de retenue (48) sans pouvoir tourner jusqu'à une position axiale spécifiée où le guidage forcé axial peut être supprimé par rotation de la douille de poinçonnage (52).

13. Dispositif (2) selon l'une des revendications 10 à 12, dans lequel des butées d'entraîneur avant et reculées (102, 104) sont formées au niveau de la douille de poinçonnage (52) et du poinçon (56), les butées d'entraîneur avant (102) pour pouvant être désengagées par rotation pour libérer le guidage forcé.

14. Dispositif (2) selon l'une des revendications précédentes, dans lequel le dispositif de commande (28) est conçu de telle sorte que les étapes suivantes soient réalisées :
a) dans une position initiale, la pièce (6) est en appui sur le support de composant (76),
b) l'unité de placement (10) se déplace dans le sens d'approche (18) et l'élément de retenue (48) presse l'outil contre le support de composant (76) et l'opération de perforation et l'opération de mise en forme de trou sont effectuées,
c) la position de l'outil est fixée par insertion d'une tige de centrage (42),
d) l'unité de réglage (10) est reculée dans le sens opposé au sens d'approche (18) et l'élément de liaison (4) est introduit dans l'unité de placement (10),
e) l'unité de placement (10) est approchée dans le sens d'approche et l'élément de liaison (4) est enfoncé,
f) le recul est effectué jusqu'à la position initiale.

15. Procédé de placement d'un élément de liaison (4) sur une pièce à l'aide d'un dispositif (2) qui comporte une unité de placement (10) pourvue d'un élément de retenue (48) et un support de composant (20) situé en face de l'unité de placement (10) et pourvu d'un appui de composant (76), le procédé comprenant les étapes suivantes :
- effectuer une opération de perforation et une opération de mise en forme de trou dans une première étape dans laquelle
- la pièce (6) est serrée entre l'élément de retenue (48) et l'appui de composant (76),
- un trou (90) est ménagé à l'aide d'un poinçon (56) de l'unité de placement (10) qui est déplacé dans le sens d'approche (18) par rapport à l'élément de retenue (48),
- une collerette (92) emboutie dans le sens opposé au sens d'approche (18) et entourant le trou (90) est formée à l'aide d'une douille de matriçage (22) qui est disposée dans le support de composant (20) et qui est déplacée dans le sens opposé au sens d'approche (18),
- enfoncer l'élément de liaison (4) dans le trou (90) dans une deuxième étape à l'aide de l'unité de placement (10), aucun mouvement relatif latéral entre la pièce (6) et le dispositif (2) n'étant effectué entre les deux étapes.
